Europäisches Patentamt

European Patent Office

Office européen des brevets

(11) Publication number: **0 484 888 A2**

## EUROPEAN PATENT APPLICATION

(21) Application number: 91118852.2

(51) Int. Cl.5: **H04N 1/38**

(22) Date of filing: 05.11.91

(30) Priority: 06.11.90 JP 300477/90
22.03.91 JP 83582/91

(43) Date of publication of application:
**13.05.92 Bulletin 92/20**

(84) Designated Contracting States:
**AT BE CH DE DK ES FR GB GR IT LI NL SE**

(71) Applicant: **OMRON CORPORATION**
**10, Tsuchido-cho, Hanazono, Ukyo-ku,**
**Kyoto-shi, Kyoto-fu(JP)**

(72) Inventor: **Ohshima, Manabu, c/o Intellectual**
**Prop. Ctr.**
**Omron Corporation, 20, Igadera, Shimokaiinji**
Nagaokakyo-shi, Kyoto 617(JP)
Inventor: **Yamaguchi, Yoshinori, c/o**
**Intellectual Prop. Ctr.**
**Omron Corporation, 20, Igadera, Shimokaiinji**
**Nagaokakyo-shi, Kyoto 617(JP)**
Inventor: **Kato, Mitsutaka, c/o Intellectual**
**Prop. Ctr.**
**Omron Corporation, 20, Igadera, Shimokaiinji**
**Nagaokakyo-shi, Kyoto 617(JP)**

(74) Representative: **WILHELMS, KILIAN &**
**PARTNER Patentanwälte**
**Eduard-Schmid-Strasse 2**
**W-8000 München 90(DE)**

(54) **Image scanner.**

(57) Characters, graphic images, etc. described on a medium such as a sheet of paper is read by an image sensor producing an output signal related to an image of the items thus read. The output signal is converted into digital image data to be stored in an image memory. If necessary, the image data is further converted into dither image data. The image data is read from the image memory and is then sent to a display to be presented as a visible image. Of the displayed image, a unnecessary portion or a necessary portion to be used later or to be stored in the storage is specified. The portion specified to be unnecessary (i.e. the portion other than the portion designated to be necessary) is erased from the image memory.

Fig.1

Field of the Invention

The present invention relates to an image scanner for reading an image of, for example, graphics and/or characters.

Description of Related Art

Heretofore, there have been proposed various kinds of image scanners which reads drawings, characters, and the like in the form of image data. In the scanners of this type, a drawing or a document is irradiated by a light emitted from a light source such that a reflection light representing an image thereof is converted, for example, by an image sensor into an analog image signal. The obtained analog image signal is then digitalized to be transferred to a host computer. The digital signal is thereafter presented as an image on a display or is stored in a storage.

In the conventional image scanner of this kind, however, the image acquisition or read width is fixed and the image read start position is visually confirmed by the operator. Consequently, the image read operation is achieved with margins in the upper, lower, right, and left sides of the image for convenience of the operator. However, if the attained data has an excessive amount, there arises a problem that the processing time is increased when achieving post-processing such as an image communication and/or an editing on the attained data.

Furthermore, in the image scanner of the prior art, in order to present the image information read by the image scanner on a display, it has been required to adopt such peripheral units as an interface (I/F) and a computer. In consequence, the image scanner is attended with a problem that the image information cannot be directly presented on a display of a general-purpose image display apparatus such as a television set.

SUMMARY OF THE INVENTION

It is therefore an object of the present invention to provide an image scanner capable of storing in a storage only the necessary image data selected from the image data read by an image sensor.

Another object of the present invention is to provide an image scanner in which an image read by an image scanner can be directly presented on a display of a general-purpose image display apparatus without using peripheral units such as an interface and a computer.

In accordance with the present invention, there is provided an image scanner characterized by including image data reading means for reading as image data information described on a medium such as a sheet of paper, image data storing means for storing therein the image data thus read by said image data reading means, display means for displaying an image represented by the image data stored in said image data storing means, input means for specifying and inputting an unnecessary portion of the image presented on said display means, and unnecessary data erasing means for erasing from said image data storing means image data representing the unnecessary portion of the image specified by said input means.

The image data is subjected to a dither processing when necessary.

In accordance with the present invention, data of the unnecessary portion is erased from the image data storing means by the unnecessary data erasing means. As a result, only the necessary image data is kept stored in the image data storing means.

As above, in the image scanner in accordance with the present invention, the obtained image data is directly displayed such that when the operator specifies only a necessary portion of the display screen, image data representing the portion other than the necessary portion is erased so that only the necessary image data remains in the storing means. This leads to an advantageous effect that the processing time of the post-processing of the image data is appropriately minimized.

An image scanner in accordance with the present invention includes reading means for reading information described on a medium such as a sheet of paper, video signal converter means for converting a signal generated from said reading means into a video signal which includes horizontal and vertical synchronizing signals and which can be processed by an external display to be presented as an image thereon, and video signal output means connectible to an external display to which the video signal obtained from said video signal converting means is outputted.

The video signal may be of any format such as the format of the national television system committee (NTSC), the format of the phase alternating by line system (PAL), the format of the red, green, and blue (RGB) signal system, or the format including a luminance signal (Y) and a color difference signals (R-Y, G-Y, etc).

As described above, the image scanner in accordance with the present invention is structured such that image information read by an image sensor is converted into a video signal to be outputted to an external general-purpose image display. In consequence, there is advantageously obtained an effect, for example, that the image read by the image scanner can be directly presented on a display of a general-purpose image display unit without using peripheral units such as an interface and a computer.

## BRIEF DESCRIPTION OF THE DRAWINGS

These and other objects and advantages of the present invention will become apparent by reference to the following description and accompanying drawings wherein:

Fig. 1 is a schematic block diagram showing an electric constitution of an image scanner in an embodiment in accordance with the present invention;

Fig. 2 is a perspective view showing an appearance of the image scanner in the embodiment;

Fig. 3 is a perspective view showing an appearance of an image scanner in an alternative embodiment in accordance with the present invention;

Fig. 4 is a perspective view showing an appearance of an image scanner in an alternative embodiment in accordance with the present invention;

Fig. 5 is a block diagram schematically showing an electric constitution of an image scanner in an another embodiment in accordance with the present invention; and

Fig. 6 is a diagram illustratively showing the overall configuration of an alternative embodiment in a case where an image scanner is connected to various displays.

## DESCRIPTION OF THE PREFERRED EMBODIMENTS

Referring now to the accompanying drawings, a description will be given of an embodiment in accordance with the present invention.

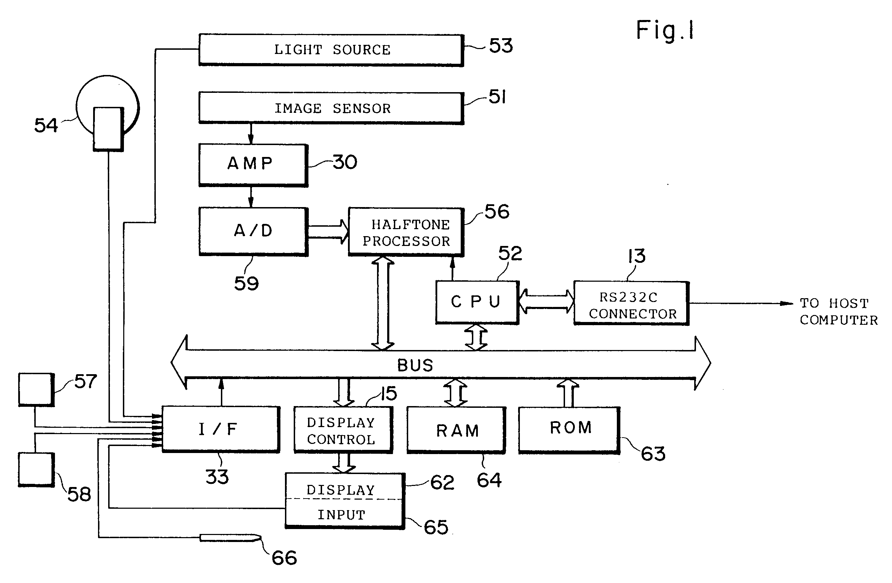

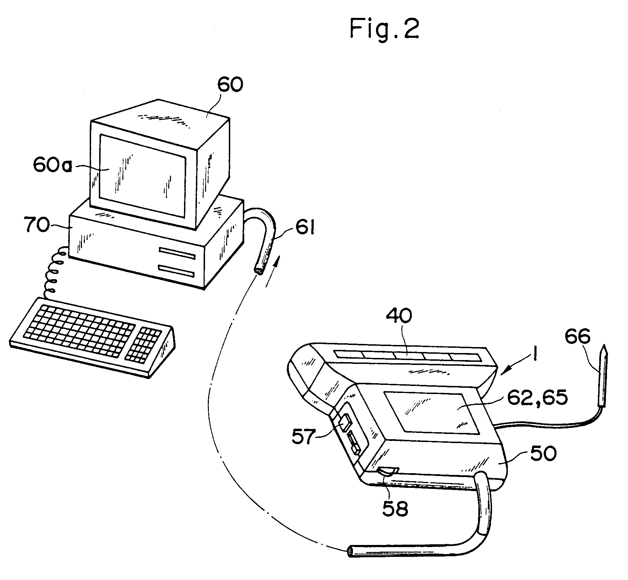

Fig. 2 is a perspective view showing an embodiment of an image scanner according to the present invention. In the configuration of Fig. 2, a reference numeral 1 indicates an image scanner having a top portion of which a width is larger than a width of a body portion 50. A window 40 is disposed on an upper surface of the top portion for confirming an image to be read and an image sensor 51 (See Fig. 1) is arranged therein. On an upper surface of the body portion 50, there are disposed a liquid crystal display 62 for presenting the acquired image and an input unit (a tablet or the like) 65 disposed on a display screen of the display 62 for specifying a region of an unnecessary image portion. The tablet may be, for example, of a type for detecting a change in an electrostatic capacity at a position thereof depressed by a pen 66 or a type for detecting a change in a pressure at a position thereof pushed by a pen (which need not be connected to the system i.e. which may be any means capable of applying a pressure thereto). A read start button 57 is arranged on a side surface of the body 50 and a gradation adjusting dial 58 is disposed on a rear side of the body 50.

The image scanner 1 thus configured is connected to a host computer 70 via a connection cable 61 of an RS232C interface so that an image acquired by the image scanner 1 is finally presented on a display screen 60a of a display 60.

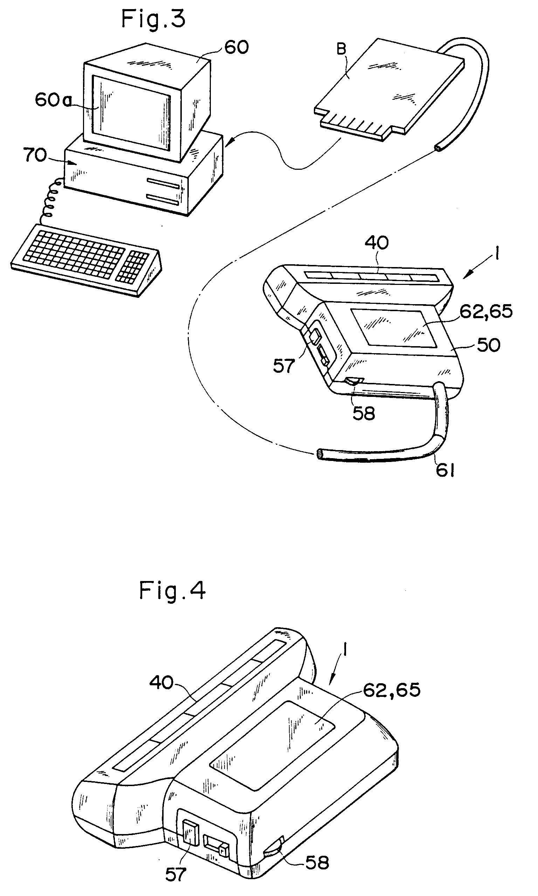

Fig. 3 shows a state where the image scanner 1 is connected via an interface board B to the host computer 70, whereas Fig. 4 is a perspective view showing a cordless image scanner. The cordless image scanner includes an image memory for storing therein a plurality of frames of image data. When the image memory is fully loaded with image data, the image scanner is connected to the host computer 70 via a detachable cord (not shown) so that the image data is delivered from the image memory to the host computer 70. Alternatively, the cordless image scanner may transmit the image data by use of an infrared ray or through a radio wave to the host computer 70.

Fig. 1 is a block diagram showing an electric constitution of the image scanner 1. The configuration of Fig. 1 includes an image sensor 51 employed as an image data reading means for reading as image data information of a diagram, a character, or the like described in a manuscript, a light source 53 for illuminating the manuscript, and an amplifier (AMP) 30 for amplifying a signal produced from the image sensor 51.

A reference numeral 59 denotes an analog-to-digital (A/D) converter circuit for digitalizing an analog image signal received from the amplifier 30 to supply a resultant signal to a halftone processor 56 used as a binarizing means. A reference numeral 52 designates a central processing unit (CPU) for achieving the overall control of the system and setting a binarization level of the binarization to be conducted by the halftone processor 56. The halftone processor 56 converts the digital image data fed from the A/D converter circuit 59 into dither image data. Connected to a bus are an input interface circuit 33, a display control unit 15, an image storage RAM 64, a program ROM 63, the halftone processor 56, and the CPU 52.

A reference numeral 54 denotes an encoder for detecting a position as follows. When the image scanner 1 is moved on a surface of a sheet of paper, the encoder 54 generates a distance signal associated with the movement of the image scanner 1. Signals respectively generated from the encoder 54, the read start button 57, the gradation adjusting dial 58, the pen 66, and the display 65 are supplied via the input interface circuit 33 to the CPU 52. A reference numeral 13 designates an RS232C driver/receiver for transferring data to the host computer 70 in conformity with the RS232C interface. The program ROM 63 is loaded with a program achieving the overall sequence control of the system.

The image scanner 1 having the configuration above operates primarily under control of the CPU 52 as follows. With the read start button 57 kept depressed, when the operator moves the image scanner 1, information of the manuscript illuminated by the light source 53 is read by the image sensor 51 so as to produce as an analog signal. The signal is supplied via the amplifier 30 to the A/D converter circuit 59 so as to be converted therethrough into a digital signal.

The digital signal is attained by digitalizing the analog signal and hence includes gradation information such that the signal is accordingly binarized by the halftone processor 56 to which a binarization level is set by the CPU 52. The obtained signal is supplied to and is stored in the image storage RAM 64 and then is further fed via the display control unit 15 to the display 62 to be presented thereon.

The operator visually checks the image presented on the display screen, and if it is found that the desired information has not been obtained by the system, the operator conducts again the image read processing. The image displayed on the display screen is an image having a width determined by the read width of the image sensor 51 and hence includes excessive unnecessary information. In this situation, if the data is directly used in the post-processing, the processing time required for the post-processing is disadvantageously increased.

To overcome this difficulty, the operator specifies from the input unit 65 a necessary range of the image displayed on the display 62. In response to this operation, the system erases data belonging to the unnecessary portion from the image data beforehand stored in the image storage RAM 64. As a method of specifying the image range when necessary, there may be employed, for example, a method in which two points on a diagonal line of a rectangle defining the necessary range are specified.

Through the operation above, only the actually necessary image data is stored in the image storage RAM 64; consequently, when the data is used in the post-processing, the processing time required for the processing is an inherent processing period of time, namely, the processing time does not include the period of time consumed for the unnecessary image data.

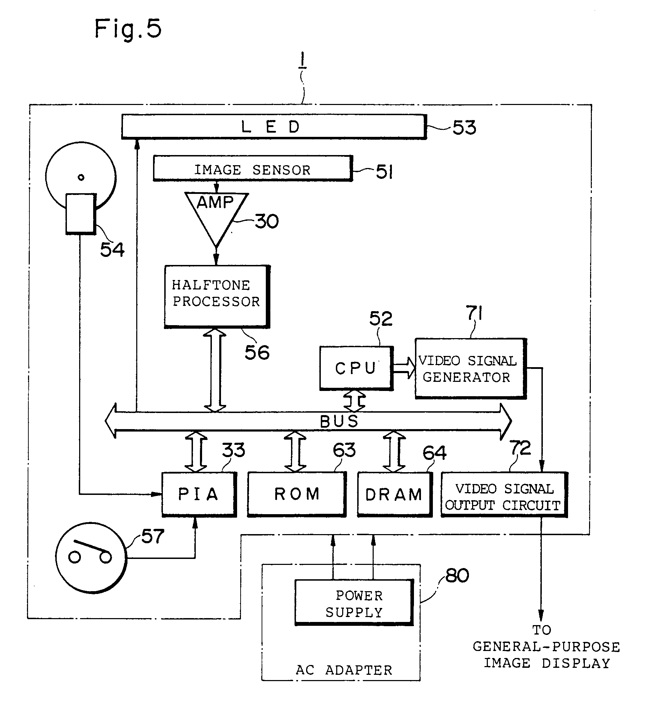

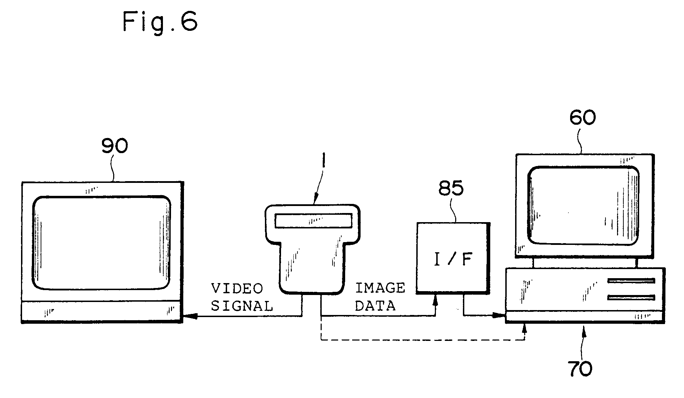

Referring next to Figs. 5 and 6, a description will be given of an another embodiment in accordance with the present invention. In these diagrams, the same constituent elements as those of Figs. 1 to 4 are assigned with the same reference numerals.

In the structure of Fig. 5, a switch 57 is disposed for the image scanner 1 to read an image of graphics and/or characters. When the image sensor 51 is moved, a rotary encoder 54 detects an amount of shift of the image sensor 51. A peripheral interface adapter (PIA) 33 supplies a resultant detection signal delivered from the rotary encoder 54 to a CPU 52 via a bus. The image sensor 51 is operative when a light generated from an LED 53 is irradiated onto an image of graphics or characters to detect a reflection light thereof. A halftone processor 56 conducts a gradation processing on an image signal supplied from the image sensor 51 via an amplifier (AMP) 30.

A dynamic RAM (DRAM) 64 is disposed to store therein image data, whereas a program ROM 63 is used to load therein a program controlling the CPU 52. A video signal generator circuit 71 converts an image signal supplied via the halftone processor 56 and the CPU 52 into a video signal. A video signal output circuit 72 delivers the converted video signal to a general-purpose image display apparatus such as a television set. An alternating-current (AC) adapter 80 transforms a power source voltage into a predetermined voltage to supply the resultant power to the image scanner 1.

Subsequently, a description will be given of the operation achieved by the construction above.

When the operator sets the switch 57 to ON, an ON signal thereof is supplied to the CPU 52 via the PIA 33 and the bus. In response to the ON signal, the CPU 52 activates the LED 53 to emit a light. Thereafter, when the operator moves the image scanner 1 on a sheet of paper on which a graphic image and characters are drawn, the rotary encoder 54 detects an amount of the shift in association with the movement of the image scanner 1.

The light emitted from the LED 53 is reflected on a surface of the sheet of paper such that the reflection light is received by the image sensor 51, thereby producing an image signal. The image signal is then inputted via the amplifier 30 to the halftone processor 56, which in turn conducts a gradation processing on the image signal. Image data resultant from the gradation processing is sequentially loaded in the DRAM 64 in accordance with the amount of shift detected by the rotary encoder 54. The image data thus stored in the DRAM 64 is read therefrom by the CPU 52 and then is fed to the video signal generator circuit 71. The image data supplied to the video signal generator circuit 71 is converted into a video signal to be delivered to the video signal output circuit 72 such that the video signal is subjected to various signal processing. A video signal resultant from the processing above is sent to an external general-purpose image display.

The signal processing conducted to produce the video signal may include a gamma-correction, a contour emphasis, a mixing of horizontal and vertical synchronizing signals, and the like. The obtained video signal may be of the NTSC format, the PAL format, or the RGB signal format, a format including only a luminance signal, or a format constituted with a luminance signal and color difference signals.

Fig. 6 shows a configuration example of a system where an image scanner of the present invention is connected to various kinds of displays.

In the constitution of this diagram, an image scanner 1 is designed to produce a video signal as described above and to generate image data as in the conventional apparatus. Consequently, when a video signal output terminal (not shown) of the image scanner 1 is directly connected to an external input terminal of a general-purpose image display 90 such as a television set, an image read by the image scanner 1 can be directly presented on the display 90. Moreover, image data is supplied via an interface (I/F) 85 or directly to a computer 70, which accomplishes various image processing on the received image data to deliver a resultant signal to a display 60, thereby presenting an image on the display 60.

While particular embodiments of the invention have been shown and described, it will be obvious to those skilled in the art that various changes and modifications may be made without departing from the present invention in its broader aspects.

**Claims**

1. An image scanner comprising:

     image data reading means for reading as image data information described on a medium such as a sheet of paper;

     image data storing means for storing therein the image data thus read by said image data reading means;

     display means for displaying an image represented by the image data stored in said image data storing means;

     input means for specifying and inputting an unnecessary portion of the image presented on said display means; and

     unnecessary data erasing means for erasing from said image data storing means image data representing the unnecessary portion of the image specified by said input means.

2. An image scanner in accordance with claim 1 wherein said image data reading means includes:

     an image sensor;

     an analog-to-digital converter circuit for converting a signal produced from said image sensor into digital data; and

     a halftone processor for converting the image data created from the analog-to-digital converter circuit into dither image data.

3. An image scanner comprising:

     reading means for reading information described on a medium such as a sheet of paper;

     video signal converter means for converting a signal generated from said reading means into a video signal which includes horizontal and vertical synchronizing signals and which can be processed by an external display to be presented as an image thereon; and

     video signal output means connectible to an external display to which the video signal obtained from said video signal converting means is outputted.

Fig.1

EP 0 484 888 A2

Fig.2

Fig.3

Fig.4

# Fig.5

LED ~53

IMAGE SENSOR ~51

AMP ~30

HALFTONE PROCESSOR

56

54

52

CPU

71

VIDEO SIGNAL GENERATOR

BUS

33    63    64    72

PIA    ROM    DRAM    VIDEO SIGNAL OUTPUT CIRCUIT

57

POWER SUPPLY

80

AC ADAPTER

TO GENERAL-PURPOSE IMAGE DISPLAY

Fig.6